# EUROPÄISCHE PATENTSCHRIFT

(11) **EP 2 371 641 B1**
(45) Veröffentlichungstag und Bekanntmachung des Hinweises auf die Patenterteilung: **07.05.2014**
(21) Anmeldenummer: 11159353.9
(22) Anmeldetag: 23.03.2011
(51) Int. Cl.: B60T 13/26, B60T 13/68, B60T 15/20, B60T 7/04

(54) **Pneumatisch vorgesteuertes Anhängersteuermodul mit beiden Steuerkammern vorgeordnetem Backup-Ventil**
Pneumatically operated pilot trailer control module with backup valve upstream from both control chambers
Module de commande de remorque piloté de manière pneumatique et doté d'une valve de secours en amont des deux chambres de commande

(30) Priorität: 24.03.2010 DE 102010012498
(43) Veröffentlichungstag der Anmeldung: 05.10.2011
(73) Patentinhaber: KNORR-BREMSE Systeme für Nutzfahrzeuge GmbH, 80809 München (DE)
(72) Erfinder: Herges, Michael, 80935, München (DE); Röther, Friedbert, 74389, Cleebronn (DE); Werner, Kai, 74321, Bietigheim-Bissingen (DE); Hecker, Falk, 71706, Markgröningen (DE)
(74) Vertreter: Schönmann, Kurt

(56) Entgegenhaltungen:
- EP-A2- 2 090 481
- WO-A1-2004/022401
- DE-A1- 10 236 920
- DE-A1- 10 310 235
- DE-A1-102005 051 686

## Beschreibung

Die Erfindung betrifft ein pneumatisch vorgesteuertes Anhängersteuermodul eines elektronischen Bremssystems einer Zugfahrzeug-Anhängerkombination zur Erzeugung eines Bremsdrucks für den Anhänger abhängig von einem von einem Fußbremsmodul vorgegebenen Bremssignal, das zum einen als durch eine elektronische Steuereinheit erzeugtes elektrisches Signal und zum andern als direktes pneumatisches Signal zur Realisierung einer unterlegten Sicherheitsebene vorliegt, wobei im Rahmen eines elektrischen Bremskreises das elektrische Signal zur Ansteuerung einer Ventileinrichtung zur Erzeugung eines Steuerdrucks auf einen ersten Steuerkolben eines Relaisventils und im Rahmen eines pneumatischen Bremskreises das direkte pneumatische Signal zur Erzeugung eines Steuerdrucks auf einen zweiten Steuerkolben des Relaisventils vorgesehen ist, und wobei der pneumatische Bremskreis wenigstens ein von der elektronischen Steuereinheit steuerbares Backup-Ventil aufweist, gemäß dem Oberbegriff von Anspruch 1.

Eine solches Anhängersteuermodul ist beispielsweise aus der DE 102 36 920 A1 bekannt, wobei der erste Steuerkolben durch eine erste Steuerkammer gesteuert und einem vorrangigen elektrischen Steuerkreis zugeordnet ist, während der zweite Steuerkolben durch eine zweite Steuerkammer gesteuert und einem nachrangigen pneumatischen Steuerkreis zugeordnet ist. Die beiden Steuerkolben können jeweils ein Doppelsitzventil betätigen, um aus einem Vorratsdruck einen Bremsdruck für den Anhänger zu modulieren. Der Druck in der ersten Steuerkammer auf den ersten Steuerkolben wird von einer Einlass-/Auslassventilanordnung erzeugt, die durch die elektronische Steuereinheit mittels des elektrischen Signals angesteuert wird. Hingegen wird der Druck auf den zweiten Streuerkolben in der zweiten Steuerkammer von einem pneumatischen Kanal des Fußbremsmoduls als direktes pneumatisches Signal gebildet.

Da das im Fußbremsmodul erzeugte elektrische Signal vor dem pneumatischen Signal Vorrang haben soll wird bei Vorliegen des elektrischen Signals das pneumatische Signal mittels des Backup-Ventils zurückgehalten. Fällt jedoch das elektrische Signal störungsbedingt aus, so wird durch Umschalten des Backup-Ventils das pneumatische Signal wirksam, so dass die Bremsanlage auch in einem derartigen Störungsfall ihre Funktionsfähigkeit aufrecht erhält. Das im Normalfall in Sperrstellung und im Störfall in Durchlassstellung geschaltete Backup-Ventil ist dabei vom Fußbremsmodul aus gesehen nur der ersten Steuerkammer vorgeordnet oder vorgeschaltet während die zweite Steuerkammer stets mit dem pneumatischen Signal beaufschlagt wird. Im Normalfall wird dann in der dem elektrischen Steuerkreis zugeordneten ersten Steuerkammer über die elektro-pneumatische Einlass-/Auslassventilanordnung eine Rückhaltekraft auf den dem pneumatischen Steuerkreis zugeordneten zweiten Steuerkolben erzeugt, welche gegen dessen das Doppelsitzventil betätigende Bewegung wirkt. Somit kann der modulierte Bremsdruck im vorrangigen elektrischen Steuerkreis auf einen niedrigen Wert eingeregelt werden, ohne dass der nachrangige pneumatische Steuerkreis anspricht.

Zugfahrzeuge von Zugfahrzeug-Anhängerkombinationen verfügen neben der verschleißbehafteten Reibungsbremse häufig über eine nahezu verschleißfreie Retarderbremse während der antriebslose Anhänger lediglich über Reibungsbremsen verfügt. Im Zugfahrzeug ist daher ein sog. Bremsen-blending möglich, d.h. eine Kombination der Retarderbremse mit der Reibungsbremse, um eine geforderte Abbremsung zu erzielen.

Einerseits ist der Bremsung einer Zugfahrzeug-Anhängerkombination insbesondere zur Vermeidung von Koppelkräften eine möglichst gleich große Abbremsung von Zugfahrzeug und Anhänger anzustreben. Andererseits darf gemäß gesetzlicher Vorgaben, insbesondere gemäß ECE R13 die vom Retarder des Zugfahrzeugs aufgebrachte Bremsleistung nicht durch eine entsprechende Bremsleistung der Reibungsbremse des Anhängers kompensiert werden. Im Extremfall, d.h. wenn im Zugfahrzeug zur Verschleißreduzierung ausschließlich mit der Retarderbremse gebremst wird, liegt daher kein elektrisches Signal für den elektrischen Bremskreis und damit aber auch kein Rückhaltedruck für den zweiten Steuerkolben des pneumatischen Bremskreises vor. Damit würde aber das pneumatische Signal am zweiten Steuerkolben wirken und das Doppelsitzventil betätigen, so dass wider der oben beschriebenen gesetzlichen Vorgaben eine der Retarder-Bremsleistung entsprechende Bremsleistung der Reibungsbremse des Anhängers erzeugt würde. Somit muss in der Praxis die vom Retarder maximal aufbringbare Bremsleitung derart beschränkt werden, dass der pneumatische Bremskreis des Anhängers nicht anspricht. Dadurch kann allerdings die vom Retarder maximal aufbringbare Bremsleistung nur beschränkt ausgenutzt werden, was nachteilig ist.

Ein ähnliches Problem ergibt sich für die Koppelkraftregelung zur Harmonisierung der Abbremsung von Zugfahrzeug und Anhänger. Denn auch für eine Koppelkraftregelung ist ein bestimmter Rückhaltedruck am zweiten Steuerkolben notwendig, welcher zusätzlich zu dem Rückhaltedruck für das Bremsen-Blendig mit Retarder am zweiten Steuerkolben wirken sollte. Dies gilt insbesondere in Ländern, in denen Anhänger ohne lastabhängige Bremse verwendet werden, wie beispielsweise in Japan. Insbesondere im Leerzustand des Anhängers ist dann ein relativ großer Rückhaltedruck für den zweiten Steuerkolben notwendig, um den Anhänger nicht zu überbremsen. Bedingt durch eine wünschenswerte Rückhaltung des zweiten Steuerkolbens kann der Anhänger mit geringem Steuerdruck abgebremst werden.

Der Erfindung liegt demzufolge die Aufgabe zugrunde, ein Anhängersteuermodul der eingangs erwähnten Art derart fortzubilden, dass der elektrische Steuerkreis vom pneumatischen Steuerkreis entkoppelt ist, um eine gegenseitige Beeinflussung möglichst zu vermeiden.

Diese Aufgabe wird erfindungsgemäß durch die Merkmale von Anspruch 1 gelöst.

### Offenbarung der Erfindung

Die Erfindung schlägt vor, dass das Backup-Ventil ausgangsseitig mit der ersten Steuerkammer und der zweiten Steuerkammer in Verbindung steht und gesehen vom Fußbremsmodul der ersten Steuerkammer und der zweiten Steuerkammer vorgeordnet ist.

Somit wird im Normalfall (ungestörter elektrischer Bremskreis) bei in Sperrstellung geschaltetem Backup-Ventil nicht nur die erste Steuerkammer sondern auch die zweite Steuerkammer von dem pneumatischen Signal des Fußbremsmoduls abgeschnitten, so dass in der zweiten Steuerkammer kein den zweiten Steuerkolben betätigendes pneumatisches Signal mehr vorliegen kann. Insbesondere ist dann auch keine Rückhaltekraft für den zweiten Steuerkolben mehr notwendig, welcher außer Kraft gesetzt ist. Vielmehr wird im Normalfall lediglich der erste Steuerkolben durch den von der Einlass-Auslassventilkombination ausgesteuerten pneumatischen Steuerdruck gesteuert. Damit ist der elektrische Steuerkreis vom pneumatischen Steuerkreis weitestgehend entkoppelt, insbesondere wird eine unabhängige elektrische Steuerung des Anhängerbremsdrucks ermöglicht. Die pneumatische Backup-Kennlinie des Fußbremsventils kann dann unabhängig von der elektrischen Kennlinie des Elektronischen Bremssystems gewählt werden.

Weiterhin können die eingangs erwähnten Probleme des Stands der Technik in Verbindung mit Retarderbremsungen bzw. Koppelkraftregelungen vermieden werden, d.h. moderne leistungsstarke Retarder können besser genutzt und damit der Bremsenverschleiß verringert werden. Auch kann bei Anhängern ohne lastabhängige Bremskraftregelung (ALB) eine Koppelkraftregelung problemlos realisiert werden.

Weiterhin können die beim Stand der Technik notwendigen Maßnahmen zur Erzeugung der Rückhaltekraft für den zweiten Steuerkolben entfallen, wodurch sich der Aufbau des Anhängersteuermoduls vereinfacht.

Wenn der elektrische Steuerkreis ausfällt, wird das Backup-Ventil unbestromt federbelastet in Durchlassstellung geschaltet, wodurch sowohl die erste Steuerkammer als auch die zweite Steuerkammer belüftet werden und dadurch im Sinne einer Parallelredundanz das Doppelsitzventil betätigt wird, um Bremsdruck aufzubauen.

Nicht zuletzt ist das Anhängersteuermodul gemäß der Erfindung gemäß der gesetzlichen Vorgaben weiterhin zweikreisig steuerbar, als bei einem Ausfall des elektrischen Steuerkreises der pneumatische Steuerkreis wirksam bleibt und umgekehrt.

Durch die in den Unteransprüchen aufgeführten Maßnahmen sind vorteilhafte Weiterbildungen und Verbesserungen der in Anspruch 1 angegebenen Erfindung möglich.

Besonders bevorzugt steht die erste Steuerkammer stets mit der zweiten Steuerkammer über wenigstens eine Drosseleinrichtung in Verbindung. Dadurch wird sichergestellt, dass auch bei einem Defekt in einer der Steuerkammern, beispielsweise aufgrund von Undichtigkeiten infolge des sich an der Drossel ausbildenden Staudrucks noch in der intakten Steuerkammer genügend Steuerdruck ansteht, um noch einen ausreichenden Bremsdruck aufzubauen.

Gemäß einer Weiterbildung ist die Steuereinheit ausgebildet, um die Funktionen des Backup-Ventils auf Plausibilität zu überprüfen. Dies erscheint ratsam, denn aufgrund der vollständigen Entkopplung beider Steuerkammern vom Backup-Druck durch das Backup-Ventil im Normalfall (keine Störung des elektrischen Steuerkreises) muss sichergestellt sein, dass das Backup-Ventil tadellos funktioniert. Hierzu können beispielsweise die Bremskreise mittels des Backup-Ventils zeitweilig entlüftet werden, insbesondere im Hillholder-Betrieb, wenn kein Backup-Druck erzeugt wird bzw. belüftet werden, insbesondere bei Bremspedalbetätigung im Stand im Rahmen eines Testzyklus.

Üblicherweise ist das Backup-Ventil zusammen mit der Einlassventil-/Auslassventilkombination in einem Ventilblock zusammen mit der zugeordneten Steuerelektronik aufgenommen. Insbesondere ist das Backup-Ventil in einer Ventilbohrung des Ventilblocks aufgenommen, in welcher wenigstens ein das pneumatische Steuersignal führender Druckkanal mündet. Um das Backup-Ventil und auch die weiteren Ventile montieren zu können, ist in der Regel ein wenigstens die Ventilbohrung des Backup-Ventils gegenüber der umgebenden Atmosphäre verschließender Deckel vorhanden. Dieser Deckel kann am Ventilblock seitlich oder kopfseitig angeordnet sein. Beim Stand der Technik schützt dieser Deckel den Innenraum des Ventilblocks lediglich vor Verschmutzung. Es sind aber Fälle denkbar, in welchen das Backup-Ventil während des Betriebs aus seiner Ventilbohrung herausgelöst wird. Dies hätte eine Entlüftung der Druckkanäle zur Folge, welche das pneumatische Signal des Fußbremsmoduls führen, was zur Folge hätte, dass im Backup-Betrieb keine Anhänger-Bremsung mehr möglich wäre. Deshalb ist bevorzugt vorgesehen, dass der Deckel an dem Ventilblock durch geeignete Mittel wie beispielsweise Dichtungen derart druckdicht befestigt ist, dass im Inneren des Ventilblocks ein Druck von wenigstens 3 x 10⁵ Pa (3 bar) gehalten werden kann. Dieser Druck ist als Steuerdruck gerade ausreichend, um in dem dem Backup-Ventil nachgeschalteten Relaisventil einen ausreichenden Bremsdrucks zu modulieren.

Elektronische Bremssysteme (EBS) verfügen über eine Regelung des Bremsdrucks. Entsprechend ist eine Drucksensorik vorhanden, um den vom Relaisventil auf der Basis des elektrischen Signals des elektrischen Steuerkreises ausgesteuerten Ist-Bremsdruck zu messen und in einer elektronischen Steuereinheit mit dem der Fahrerbremsanforderung entsprechenden Soll-Bremsdruck zu vergleichen.

Dabei wird der Drucksensor bevorzugt durch in der elektronischen Steuereinheit implementierte Routinen auf Fehler überwacht, insbesondere um zu verhindern, dass zu ein fälschlicherweise zu hoher Ist-Bremsdruck detektiert wird, was eine Einstellung eines zu geringen Bremsdrucks durch die Regelung zur Folge hätte.

Weiterhin kann es vorkommen, dass die Bremsdruckregelung einen zu geringen Soll-Bremsdruck berechnet. Deshalb sind in der Steuereinheit bevorzugt Überwachungsroutinen vorhanden, welche Fehler bei der Generierung des Soll-Bremsdrucks aus dem vom Fahrer vorgegebenen Bremsanforderungssignal (Bremspedalbetätigung) erkennen. Solche Fehler können insbesondere den elektrischen Signalgeber im Fußbremsmodul, die elektrische Verkabelung, den A/D-Wandler, die elektronische Steuereinheit und die Software betreffen. Bei Auftreten eines Fehlers in diesem Bereich muss sichergestellt sein, dass das Backup-Ventil entstromt wird, um in seiner Durchlassstellung das pneumatische Signal des Fußbremsmoduls in die beiden Steuerkammern des Relaisventils einzusteuern. Ein solches System ist dann "fail-siient".

Weitere die Erfindung verbessernde Maßnahmen werden nachstehend gemeinsam mit der Beschreibung eines Ausführungsbeispiels der Erfindung anhand der Zeichnung näher dargestellt.

### Zeichnung

In der Zeichnung zeigt die einzige Figur einen Schaltplan eines Anhängersteuermoduls eines elektronischen Bremssystems gemäß einer bevorzugten Ausführungsform der Erfindung.

### Beschreibung des Ausführungsbeispiels

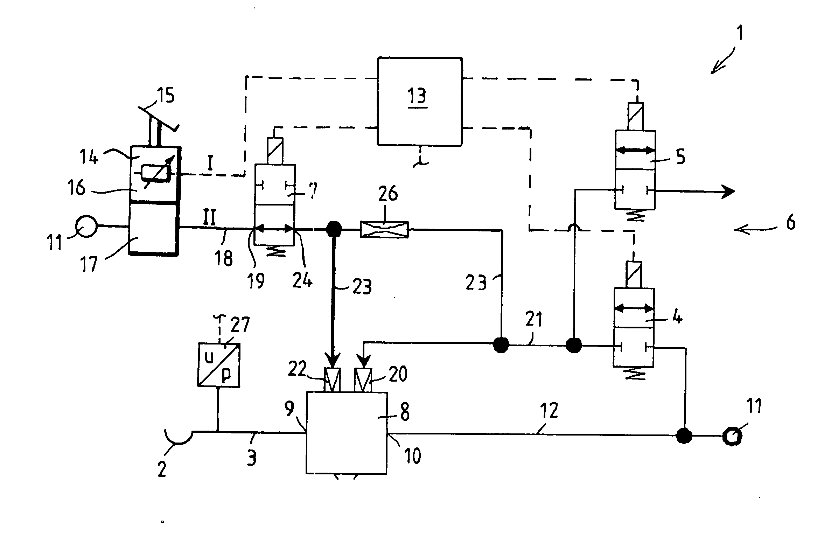

In Fig.1 ist mit 1 ein bevorzugtes Ausführungsbeispiel eines Anhängersteuermoduls eines elektronischen elektro-pneumatischen Bremssystems eines Nutzfahrzeugs bezeichnet, wobei das Anhängersteuermodul 1 im Zugfahrzeug einer Zugfahrzeug-Anhängerkombination angeordnet ist, um den Druck in einer zu einem Kupplungskopf "Bremse" 2 führenden Bremsleitung 3 zu steuern.

Neben einem Einlassventil 4 und einem Auslassventil 5 als Einlass-/Auslassventilkombination 6 umfasst das Anhängersteuermodul 1 ein Backup-Ventil 7 sowie ein Relaisventil 8, wobei das Relaisventil 8 von der Einlassventil-/Auslassventilkombination 6 und vom Backup-Ventil 7 pneumatisch vorsteuerbar ist. An einem Ausgang 9 steht das Relaisventil 8 mit der Bremsleitung 3 in Verbindung. In einen Vorratsanschluss 10 des Relaisventils 8 mündet eine von einem Druckluftvorrat 11 herangeführter Vorratsdruckkanal 12. Das Einlassventil 4, das Auslassventil 5 sowie das Backup-Ventil 7 sind in hier nicht gezeigten Ventilbohrungen eines Ventilblocks aufgenommen, an welchen eine elektronische Steuereinheit 13 zur elektrischen Steuerung der bevorzugt jeweils als 2 / 2-Wege-Magnetventil ausgebildeten Einlassventils 4, Auslassventils 5 und Backup-Ventils 7 beispielsweise mit einem Elektronikgehäuse angeflanscht ist. In diesem Ventilblock sind auch alle bereits genannten und noch im Folgenden aufgeführten Druckkanäle ausgebildet.

Ein Fußbremsmodul 14 erzeugt abhängig von einer Betätigung eines Bremspedals 15 durch den Fahrer Bremsanforderungssignale. Das Fußbremsmodul 14 weist hierzu einen elektrischen Kanal 16 und wenigstens einen pneumatischen Kanal 17 auf, wodurch in dem Fußbremsmodul 16 in paralleler Weise ein elektrisches Bremsanforderungssignal und ein pneumatisches Bremsanforderungssignal erzeugbar ist.

Aus dem elektrischen Bremsanforderungssignal werden in der elektronischen Steuereinheit 13 elektrische Steuersignale für die Einlass-/Auslassventilkombination 6 im Rahmen eines elektrischen Steuerkreises I erzeugt. Das vom pneumatischen Kanal 17 des Fußbremsmoduls 14 erzeugte pneumatische Bremsanforderungssignal wird hingegen bevorzugt nicht verändert und über eine Signalleitung bzw. einen Druckkanal 18 direkt an einen Anschluss 19 des Backup-Ventils 7 im Rahmen eines pneumatischen Steuerkreises 11 gesteuert. Das Backup-Ventil 7 ist als 2/2-Wege-Magnetventil im Störbetrieb unbestromt und federbelastet in eine Durchgangsstellung und im Normalbetrieb durch die Steuereinheit 13 bestromt in eine Sperrstellung geschaltet.

Aus den elektrischen Steuersignalen der Steuereinheit 13 erzeugt die Einlass-/Auslassventilkombination 6 aus dem Vorratsdruck des Druckluftvorrats 11 einen pneumatischen Steuerdruck, welcher in einer ersten Steuerkammer des Relaisventils 8 ansteht und dort auf einen ersten Steuerkolben wirkt. Hierzu weist das Relaisventil 8 einen ersten pneumatischen Steueranschluss 20 auf, welcher mit der ersten Steuerkammer in Verbindung steht. Weiterhin ist der erste Steueranschluss 20 des Relaisventils 8 hierzu mit einem von der Einlass-/Auslassventilkombination 6 herangeführten und im Ventilblock ausgebildeten Druckkanal 21 verbunden. Über eine Entlüftung 22 des Auslassventils 5 kann dann der erste Steueranschluss 20 entlüftet und über das Einlassventil 4 mit Druckluft aus dem Druckluftvorrat 11 belüftet werden.

Darüber hinaus ist ein zweiter Steueranschluss 22 des Relaisventils 8 vorgesehen, an welchen ein vom Backup-Ventil 7 herangeführter Druckkanal 23 angeschlossen ist. Der zweite Steueranschluss 22 ist mit einer zweiten Steuerkammer verbunden, welche durch einen zweiten Steuerkolben begrenzt ist.

Aus Maßstabsgründen sind die Steuerkammern und Steuerkolben in der Figur nicht gezeigt. Daher ist das vom Fußbremsmodul 14 ausgesteuerte elektrische Signal zur Erzeugung eines Steuerdrucks auf einen ersten Steuerkolben und das vom Fußbremsmodul ausgesteuerte pneumatische Signal zur Erzeugung eines Steuerdrucks auf einen zweiten Steuerkolben vorgesehen.

Durch Druckbeaufschlagung eines oder beider Steueranschlüsse 20 bzw. 22 im Bremssinn können beide Steuerkolben ein Doppelsitzventil des Relaisventils 8 betätigen, woraufhin das Relaisventil 8 aus dem Vorratsdruck des Druckluftvorrats 11 einen Bremsdruck in der Bremsleitung 3 moduliert. Die Funktionsweise eines solchen Relaisventils 8 ist hinlänglich bekannt, beispielsweise aus der DE 199 02 225 A1 oder aus der DE 102 36 920 A1. Deshalb soll hier nicht weiter darauf eingegangen werden.

Über den Druckkanal 23 sind die beiden Steueranschlüsse 20 und 22 einerseits untereinander und andererseits mit einem weiteren Anschluss bzw. Ausgang 24 des Backup-Ventils 7 verbunden, jenseits des Fußbremsmoduls 14.

Das Backup-Ventil 7 ist mit seinem Ausgang 24, d.h. jenseits des Fußbremsmoduls 14 gleichzeitig mit dem ersten Steueranschluss 20 bzw. der ersten Steuerkammer und mit dem zweiten Steueranschluss 22 bzw. der zweiten Steuerkammer verbunden, wobei das Backup-Ventil 7 gesehen vom Fußbremsmodul 14 der ersten Steuerkammer bzw. dem ersten Steueranschluss 20 und gleichzeitig der zweiten Steuerkammer bzw. dem zweiten Steueranschluss 22 vorgeordnet ist.

Mit anderen Worten verbindet das Backup-Ventil 7 den ersten Steueranschluss 20 und gleichzeitig den zweiten Steueranschluss 22 des Relaisventils 8 mit dem direkten pneumatischen Signal des pneumatischen Bremskreises 11 (pneumatisches Steuersignal vom Fußbremsmodul 14) gemäß einer unbestromten Durchlassstellung oder es sperrt diese Verbindung gemäß einer bestromten Sperrstellung. Dabei ist unter einem "direkten pneumatischen Steuersignal" zu verstehen, dass dieses vom Fußbremsmodul 14 ausgesteuerte Signal im Wesentlichen nicht verändert wird.

Wie die Figur zeigt, steht die erste Steuerkammer bzw. der erste Steueranschluss 20 stets mit der zweiten Steuerkammer oder mit dem zweiten Steueranschluss 22 über eine Drossel 26 in Verbindung, d.h. die Drossel ist in dem den ersten Steueranschluss 20 mit dem zweiten Steueranschluss 22 verbindenden Druckkanal 23 des Ventilblocks ausgebildet. Die Drossel ist dem Ausgang 24 des Backup-Ventils 7 daher nachgeordnet.

Wie eingangs beschreiben ist das Backup-Ventil 7 in einer Ventilbohrung des Ventilblocks aufgenommen, in welcher einerseits ein das vom Fußbremsmodul 17 herangeführte pneumatische Steuersignal führender Druckkanal 18 und andererseits der vom Backup-Ventil 7 zum zweiten Steueranschluss 22 führende Druckkanal 23 mündet. Diese Ventilbohrung ist durch einen hier nicht gezeigten Deckel nach außen hin verschlossen. Dabei ist der Deckel an dem Ventilblock durch Dichtungen derart druckdicht befestigt, dass im Inneren des Ventilblocks ein Druck von wenigstens 3 x 10⁵ Pa (3 bar) gehalten werden kann.

Die Steuereinheit 13 kann ausgebildet sein, um die Funktionen des Backup-Ventils 7 auf Plausibilität zu überprüfen. Hierzu können beispielsweise die Bremskreise 1, 11 mittels des Backup-Ventils 7 zeitweilig entlüftet werden, insbesondere im Hillholder-Betrieb, wenn kein Backup-Druck erzeugt wird bzw. belüftet werden, insbesondere bei Bremspedalbetätigung im Stand im Rahmen eines Testzyklus.

Das elektronische Bremssystem (EBS) verfügt über eine Regelung des Bremsdrucks. Entsprechend ist ein Drucksensor 27 vorhanden, um den vom Relaisventil 8 auf der Basis des elektrischen Signals des elektrischen Steuerkreises I ausgesteuerten Ist-Bremsdruck in der Bremsleitung 3 zu messen. Der entsprechende Ist-Bremsdruckwert wird bevorzugt in der elektronischen Steuereinheit 13 mit dem der Fahrerbremsanforderung entsprechenden Soll-Bremsdruckwert verglichen und eine Anpassung mittels Einflussnahme auf die Einlass-/Auslassventilkombination 6 durchgeführt.

Dabei wird der Drucksensor 27 bevorzugt durch in der elektronischen Steuereinheit 13 implementierte Routinen auf Fehler überwacht, insbesondere um zu verhindern, dass zu ein fälschlicherweise zu hoher Ist-Bremsdruck detektiert wird, was eine Einstellung eines zu geringen Bremsdrucks durch die Regelung zur Folge hätte.

Weiterhin kann es vorkommen, dass die Bremsdruckregelung einen zu geringen Soll-Bremsdruck berechnet. Deshalb sind in der Steuereinheit 13 bevorzugt Überwachungsroutinen vorhanden, welche Fehler bei der Generierung des Soll-Bremsdrucks aus dem vom Fahrer vorgegebenen Bremsanforderungssignal (Bremspedalbetätigung) erkennen. Bei Auftreten eines Fehlers wird das Backup-Ventil 7 entstromt, um in seiner Durchlassstellung das pneumatische Signal des Fußbremsmoduls 14 in die beiden Steuerkammern des Relaisventils 8 einzusteuern. Aber auch in allen anderen Fällen, in welchen der elektrische Steuerkreis einen Fehler aufweist, wird das Backup-Ventil 7 von der Steuereinheit entstromt, um in seine Durchlassstellung zu schalten.

### Bezuaszeichenliste

- 1: Anhängersteuermodul
- 2: Kupplungskopf "Bremse"
- 3: Bremsleitung
- 4: Einlassventil
- 5: Auslassventil
- 6: Einlass-/Auslassventilkombination
- 7: Backup-Ventil
- 8: Relaisventil
- 9: Ausgang
- 10: Vorratsanschluss
- 11: Druckluftvorrat
- 12: Vorratsdruckkanal
- 13: Steuereinheit
- 14: Fußbremsmodul
- 15: Bremspedal
- 16: elektr. Kanal
- 17: pneumat. Kanal
- 18: Druckkanal
- 19: Anschluss
- 20: erster Steueranschluss
- 21: Druckkanal
- 22: zweiter Steueranschluss
- 23: Druckkanal
- 24: Anschluss
- 26: Drossel
- 27: Drucksensor

## Patentansprüche

1. Pneumatisch vorgesteuertes Anhängersteuermodul (1) eines elektronischen Bremssystems einer Zugfahrzeug-Anhängerkombination zur Erzeugung eines Bremsdrucks für den Anhänger abhängig von einem von einem Fußbremsmodul (14) vorgegebenen Bremssignal, das zum einen als durch eine elektronische Steuereinheit (13) erzeugtes elektrisches Signal und zum andern als direktes pneumatisches Signal zur Realisierung einer unterlegten Sicherheitsebene vorliegt, wobei im Rahmen eines elektrischen Bremskreises (I) das elektrische Signal zur Ansteuerung einer Ventileinrichtung (6) zur Erzeugung eines Steuerdrucks auf einen ersten Steuerkolben eines Relaisventils (8) und im Rahmen eines pneumatischen Bremskreises (II) das direkte pneumatische Signal zur Erzeugung eines Steuerdrucks auf einen zweiten Steuerkolben des Relaisventils (8) vorgesehen ist, und wobei der pneumatische Bremskreis (II) wenigstens ein von der elektronischen Steuereinheit (13) steuerbares Backup-Ventil (7) aufweist, **dadurch gekennzeichnet, dass** das Backup-Ventil (7) ausgangsseitig mit der ersten Steuerkammer und der zweiten Steuerkammer in Verbindung steht und gesehen vom Fußbremsmodul (14) der ersten Steuerkammer und der zweiten Steuerkammer vorgeordnet ist.

2. Anhängersteuermodul nach Anspruch 1, **dadurch gekennzeichnet, dass** die erste Steuerkammer stets mit der zweiten Steuerkammer über wenigstens eine Drosseleinrichtung (26) in Verbindung steht.

3. Anhängersteuermodul nach Anspruch 1 oder 2, **dadurch gekennzeichnet, dass** die Steuereinheit (13) ausgebildet ist, um die Funktionen des Backup-Ventils (7) auf Plausibilität zu überprüfen.

4. Anhängersteuermodul nach einem der vorhergehenden Ansprüche, **dadurch gekennzeichnet, dass** wenigstens das Backup-Ventil (7) in einer Ventilbohrung eines Ventilblocks aufgenommen ist, in welcher wenigstens ein das pneumatische Steuersignal führender Druckkanal (18, 23) mündet, wobei ein wenigstens die Ventilbohrung gegenüber der umgebenden Atmosphäre verschließender, an dem Ventilblock derart druckdicht befestigter Deckel vorgesehen ist, dass ein Druck von wenigstens 3 x 10⁵ Pa gehalten wird.

5. Anhängersteuermodul nach einem der vorhergehenden Ansprüche, **dadurch gekennzeichnet, dass** der erste Steuerkolben, die erste Steuerkammer, der zweite Steuerkolben, die zweite Steuerkammer und ein Doppelsitzventil von dem Relaisventil (8) umfasst sind, wobei der erste Steuerkolben und der zweite Steuerkolben unabhängig voneinander das Doppelsitzventil betätigen können.

6. Elektronisches Bremssystem mit Bremsdruckregelung beinhaltend wenigstens ein Anhängersteuermodul (1) nach einem der vorhergehenden Ansprüche.

7. Elektronisches Bremssystem nach Anspruch 6, **dadurch gekennzeichnet, dass** in einer elektronischen Steuereinheit (13) Überwachungsroutinen implementiert sind, welche Fehler bei der Generierung des Soll-Bremsdrucks aus einem vom Fahrer vorgegebenen Bremsanforderungssignal erkennen.

8. Elektronisches Bremssystem nach Anspruch 6 oder 7, **dadurch gekennzeichnet, dass** wenigstens ein Drucksensor zum Erzeugen eines den Ist-Bremsdruck repräsentierenden und an die elektronische Steuereinheit (13) ausgesteuerten Signals vorgesehen ist, welcher durch in der elektronischen Steuereinheit implementierte Routinen auf Fehler überwacht wird.

## Claims

1. Pneumatically pilot-operated trailer controller module (1) of an electronic brake system in a tractor vehicle/trailer combination for generating a brake pressure for said trailer in response to a brake signal predetermined by a foot brake module (14), which is available, on the one hand, as an electrical signal generated by an electronic controller unit (13) and, on the other hand, as direct pneumatic signal for implementing a backed safety mode, wherein, within the scope of an electric brake circuit (I), said electrical signal is provided for control of a valve means (6) for generating a control pressure upon a first control piston of a relay valve (8) and, within the scope of a pneumatic brake circuit (II), said direct pneumatic signal is provided for generating a control pressure on a second control piston of said relay valve (8), and wherein said pneumatic brake circuit (II) comprises at least one backup valve controllable by said electronic controller unit (13), **characterised in that** said backup valve (7) communicates with the first control chamber and the second control chamber on the output side and, seen from said foot brake module (14), is disposed upstream of said first control chamber and said second control chamber.

2. Trailer controller module according to Claim 1, **characterised in that** said first control chamber is in permanent communication with said second control chamber via at least one restrictor means (26).

3. Trailer controller module according to Claim 1 or 2, **characterised in that** said controller unit (13) is configured for reviewing the functions of said backup valve (7) for plausibility.

4. Trailer controller module according to any of the preceding Claims, **characterised in that** at least said backup valve (7) is accommodated in a valve bore of a valve block, into which opens at least one pressure channel (18, 23) communicating said pneumatic control signal, wherein a cover is provided that closes at least said valve bore from the surrounding atmosphere and is fastened on said valve block in such a pressure-tight manner that a pressure of at least 3 x 10⁵ Pa is maintained.

5. Trailer controller module according to any of the preceding Claims, **characterised in that** the first control piston, said first control chamber, the second control piston, said second control chamber and a double-seat valve are encompassed by said relay valve (8), with said first control piston and said second control piston being in the position to operate said double-seat valve independently of each other.

6. Electronic brake system with brake pressure control, including at least one trailer controller module according to any of the preceding Claims.

7. Electronic brake system according to Claim 6, **characterised in that** monitoring routines are implemented in an electronic controller unit (13), which recognize faults in the generation of the rated brake pressure from a brake demand signal predetermined by the driver.

8. Electronic brake system according to Claim 6 or 7, **characterised in that** at least one pressure sensor is provided for generating a signal representing the actual brake pressure and output to said electronic controller unit (13) in a controlled manner, which is monitored for errors by routines implemented in said electronic controller unit.

## Revendications

1. Module de commande de remorque (1), piloté par voie pneumatique, dans un système de freinage électronique d'une combinaison véhicule tracteur/remorque, pour la génération d'une pression de freinage pour ladite remorque en réponse à un signal de freinage, qui est prédéterminé par un module de frein à pied (14), qui est disponible, d'un côté, sous forme d'un signal électrique engendré par une unité de commande électronique (13) et, d'autre côté, sous forme d'un signal pneumatique direct pour la réalisation d'un mode de sécurité soutenu, dans lequel, dans le cadre d'un circuit de frein électrique (I), ledit signal électrique est destiné pour la commande d'un moyen à soupape (6) pour la génération d'une pression de commande sur un premier piston de commande d'une soupape à relais (8) et, dans le cadre d'un circuit de frein pneumatique (II), ledit signal pneumatique direct est destiné pour la génération d'une pression de commande sur un deuxième piston de commande de ladite soupape de relais (8), et dans lequel ledit circuit de frein pneumatique (II) comprend au moins une soupape de secours commandable par ladite unité de commande électronique (13), **caractérisé en ce que** ladite soupape de secours (7) se trouve en communication avec la première chambre de commande du côté de sortie et, vu à partir dudit module de frein à pied (14), est disposé en amont de ladite première chambre de commande et ladite deuxième chambre de commande.

2. Module de commande de remorque selon la revendication 1, **caractérisé en ce que** ladite première chambre de commande se trouve en communication continue avec la deuxième chambre de commande via au moins un moyen d'étranglement (26).

3. Module de commande de remorque selon la revendication 1 or 2, **caractérisé en ce que** ladite unité de commande (13) est conçue pour la vérification des fonctions de ladite soupape de secours (7) en vue de plausibilité.

4. Module de commande de remorque selon une quelconque des revendications précédentes, **caractérisé en ce qu'**au moins ladite soupape de secours (7) est reçue dans un alésage pour soupape d'un bloc à soupapes, dans lequel s'ouvre au moins un canal de pression (18, 23), qui transfère ledit signal de commande pneumatique, dans lequel un couvercle est disposé, qui ferme au moins ledit alésage pour soupape relativement de l'atmosphère entourant et qui est fixé sur ledit bloc à soupapes d'une telle manière étanche à la pression, qu'une pression d'au moins 3 x 10⁵ Pa soit maintenue.

5. Module de commande de remorque selon une quelconque des revendications précédentes, **caractérisé en ce que** le premier piston de commande, ladite première chambre de commande, le deuxième piston de commande, ladite deuxième chambre de commande et une soupape à deux sièges sont compris par ladite soupape à relais (8), audit premier piston de commande et ledit deuxième piston de commande étant capable de commander ladite soupape à deux sièges indépendamment l'un de l'autre.

6. Système de frein électronique à commande de pression de freinage, qui comprend au moins un module de commande de remorque selon une quelconque des revendications précédentes.

7. Système de frein électronique selon la revendication 6, **caractérisé en ce que** des routines de monitorage sont réalisées dans une unité de commande électronique (13), qui reconnaissent des défauts dans la génération de la pression de freinage de consigne à partir d'un signal de demande de freinage prédéterminé par le conducteur.

8. Système de frein électronique selon la revendication 6 or 7, **caractérisé en ce qu'**au moins un capteur de pression est disposé pour la génération d'un signal représentant la pression de freinage actuelle est commandé vers ladite unité de commande électronique (13), laquelle pression est surveillée en vue des défauts par des routines réalisées dans ladite unité de commande électronique.
